# EUROPÄISCHE PATENTANMELDUNG

(11) **EP 1 293 273 A2**
(43) Veröffentlichungstag der Anmeldung: **19.03.2003**
(21) Anmeldenummer: 02090292.0
(22) Anmeldetag: 16.08.2002
(51) Int. Cl.: B21D 39/04, F16L 13/14

(54) **Verfahren und Vorrichtung zur Herstellung einer Rohrpressverbindung**

(30) Priorität: 04.09.2001 DE 10144100
(71) Anmelder: Mapress GmbH & Co. KG, 40764 Langenfeld (DE)
(72) Erfinder: Gigowski, Dr. Thomas, 41517 Grevenbroich (DE)
(74) Vertreter: Meissner, Peter E., Dipl.-Ing.

(57) **Zusammenfassung**

Die Erfindung betrifft ein Verfahren und eine Vorrichtung zur Herstellung einer Rohrpressverbindung bestehend aus einem Pressfittingelement (14), das mindestens einen im Querschnitt wulstartig ausgebildeten, ein Dichtelement aufnehmenden Abschnitt (16) und einen daran anschließenden der Einschubseite zugewandten und/oder der Einschubseite abgewandten, zylindrisch ausgebildeten Abschnitt (17,19) aufweist. Hierbei wird mittels eines den Pressfitting umfassenden Presswerkzeuges eine unlösbare dichte Rohrpressverbindung gebildet. Beim Schließen des mindestens zwei Pressbacken (1,1') aufweisenden Presswerkzeuges wird die Ringwulst (16), einschließlich des darin eingelegten Dichtelementes (15), ausschließlich axial zusammengepresst, wobei die Pressbacken radial aufeinander zu gefahren werden.

## Beschreibung

Die Erfindung betrifft ein Verfahren zur Herstellung einer Rohrpressverbindung, bestehend aus einem Pressfittingelement und einem darin eingeschobenen Leitungsrohr, gemäß dem Oberbegriff des Patentanspruches 1.

Pressfittinge für Sanitär und Heizung aus Kohlenstoffstahl oder hochlegiertem Stahl sowie aus Kupfer sind bekannt (siehe Prospekte: mapress mannesmann pressfitting-system, Lieferprogramm Sanitär Heizung, September 1998 sowie mapress Kupfer, 03/1999). Kernstück des Pressfitting-Systems ist ein aus einem Rohrabschnitt hergestellter plastisch verformbarer Pressfitting, der vorzugsweise als Muffe, Bogen, T-Stück oder Reduzierstück ausgebildet ist.

Aus der DE 1187870 A ist ein Verfahren zur Herstellung einer Rohrpressverbindung bestehend aus einer plastisch verformbaren metallischen Kupplungshülse, vorzugsweise aus Stahl, bekannt. Bei diesem bekannten Verfahren wird die Kupplungshülse durch Formpressen erzeugt. Alternativ kann die Kupplungshülse ausgehend von einem nicht spezifizierten Ausgangsmaterial durch Drehen erzeugt werden.

Die erzeugte Kupplungshülse ist charakterisiert durch einen hakenförmig, im Querschnitt nahezu dachartig ausgebildeten, einen Runddichtring aufnehmenden Bereich und einen daran anschließenden, der Einschubseite des mit der Kupplungshülse zu verbindenden Stahlrohres abgewandten zylindrischen Bereich.

Mittels zweier Pressbacken wird nach dem Ansetzen und Schließen der Pressbacken eine unlösbare, dichte Rohrpressverbindung gebildet, wobei während des Verpressens die Pressbacken sowohl auf den hakenförmig ausgebildeten Bereich einschließlich des darin eingelegten Runddichtringes, als auch auf den der Einschubseite abgewandten zylindrisch ausgebildeten Abschnitt der Kupplungshülse einwirken. Die Einwirkung ist charakterisiert durch eine ausschließliche Durchmesserverringerung beider kontaktierender Bereiche. Nachteilig dabei ist, dass der eingekammerte Runddichtring bei dieser Art der Verpressung nur geringfügig zusammengepresst wird, so dass die Abdichtung nur für geringe Drücke ausreichend ist.

In der DE 10029479 A1 ist ein Verfahren zur Herstellung einer Rohrpressverbindung offenbart, bei dem mittels eines das Pressfittingelement - charakterisiert durch einen hakenförmig, im Querschnitt nahezu dachartig ausgebildeten, einen Runddichtring aufnehmenden Bereich und einen daran anschließenden zylindrischen Bereich - zusammen mit einem darin eingeschobenen Leitungsrohr umfassenden, mindestens zwei Pressbacken aufweisenden Presswerkzeuges nach dem Ansetzen und Schließen der Pressbacken, eine unlösbare und dichte Pressverbindung zwischen dem Pressfittingelement und dem Leitungsrohr gebildet wird.

Während des Verpressens wirken die Pressbacken sowohl auf den hakenförmig ausgebildeten Bereich einschließlich des darin eingelegten Runddichtringes, als auch auf den der Einschubseite abgewandten zylindrisch ausgebildeten Abschnitt des Pressfittingelementes in der Weise ein, dass der Scheitelbereich des hakenförmig ausgebildeten Bereiches überwiegend im Durchmesser verringert und die an den Scheitelbereich angrenzenden Bereiche aufeinander zugedrückt werden.

Durch diese Art der Umformung wird das Volumen der Ringwulstkammer reduziert. Dadurch wird das eingekammerte Dichtelement vorgespannt, so dass es auf dem in den Pressfitting eingeschobenen Leitungsrohr als auch in der Ringwulst abdichtet.

Der Nachteil dieses bekannten Verfahrens liegt darin, dass es durch die Umformung der Ringwulst aufgrund der Relativbewegungen zwischen Pressbacken und Pressfitting und aufgrund der eher tangential erfolgenden Verpressung zu Materialanhäufungen, Graten oder Fältelungen kommt. Hierdurch entsteht bei der Installation für den Monteur eine erhöhte Verletzungsgefahr. Im Extremfall kann es sogar zu Anrissen im Pressfitting kommen, die ein Undichtwerden des Pressfittings begünstigen. Zudem ist bei dieser Art der Verpressung aufgrund der hohen Reibkraft zwischen Pressfitting und Pressbacken eine relativ große Verpresskraft erforderlich.

Aufgabe der Erfindung ist es, ein Verfahren zur Herstellung einer Rohrpressverbindung anzugeben, bei dem die zuvor geschilderten Nachteile vermieden werden.

Diese Aufgabe wird ausgehend vom Oberbegriff in Verbindung mit dem kennzeichnenden Merkmal des Anspruches 1 gelöst. Vorteilhafte Weiterbildungen sowie eine Vorrichtung zur Durchführung des Verfahrens sind Bestandteil von Unteransprüchen.

Nach der Lehre der Erfindung werden beim Schließen des mindestens zwei Pressbacken aufweisenden Presswerkzeuges die Ringwulst, einschließlich des darin eingelegten Dichtmittels, ausschließlich axial zusammengepresst, wobei die Pressbacken radial aufeinander zu gefahren werden. Dabei spielt es keine Rolle, ob das Presswerkzeug als Zange mit zwei oder drei schwenkbar darin gelagerten Pressbacken oder als sogenannte Pressschlinge ausgebildet ist.

Bei der radialen Bewegung der Pressbacken wandelt das auf die Ringwulst einwirkende Element diese in eine axiale Bewegung um, wobei die axiale Krafteinleitung im Fussbereich der Ringwulst einsetzt und zunehmend weitere Bereiche in Richtung Scheitelbereich erfasst

Der geschilderten Erfindung liegt die Überlegung zugrunde, dass es für die Dichtheit der Rohrpressverbindung zwischen Dichtelement und Leitungsrohr einerseits und zwischen Pressfitting und Dichtelement andererseits jeweils zu einer mindestens linienförmigen Berührung kommt. Je höher die dabei erreichte Flächenpressung zwischen den Dichtpartnern ist, desto höher ist der Druck, dem die Verbindung standhält.

Beim ausschließlichen axialen Zudrücken der Ringwulst kommt es durch die Inkompressibilität des Dichtelementes zu einer Ausdehnung des Dichtelementes in radiale Richtung. Da die radiale Ausdehnung nach außen hin durch die Ringwulst, die im wesentlichen als starr angesehen werden kann, behindert wird, erfolgt die gesamte radiale Ausdehnung des Dichtelementes in Richtung auf das Leitungsrohr. Dadurch wird die erforderliche Flächenpressung zwischen Leitungsrohr und Dichtelement einerseits und zwischen Dichtelement und Ringwulst andererseits erreicht. Die zusätzliche Verpressung in der Festigkeitsebene bleibt davon unberührt.

Nach einem weiteren Merkmal der Erfindung wird eine Vorrichtung zur Durchführung des Verfahrens vorgeschlagen. Sie besteht in bekannter Weise aus einem Presswerkzeug mit mindestens zwei radial aufeinander zu fahrbaren Pressbacken. Erfindungsgemäß ist in einer nutartigen Ausnehmung der Pressbacke mindestens ein vorzugsweise zwei Elemente angeordnet, die eine Umwandlung der radialen Bewegung der Pressbacken in ein axiales Zusammendrücken der Ringwulst bewirken. Vorzugsweise wird dies durch eine Keilform der zusammenwirkenden Flächen erreicht. Damit die Elemente nicht lose in der Pressbacke liegen und damit für den Monteur schwer zu handhaben wären, wird weiterbildend vorgeschlagen, diese radial beweglich, z. B. durch Federn in der Pressbacke, zu fixieren. Die an der Ringwulst zur Anlage kommenden Flächen der Elemente können gerade oder konturiert sein. Im letzteren Fall kommt die Fläche des Elementes von Beginn an nahezu vollständig an der Ringwulst zur Anlage. Je nachdem ob die Ringwulst symmetrisch oder asymmetrisch ausgebildet ist, sind die beiden einander gegenüberliegenden Elemente gleich oder verschieden.

Der Vorteil des vorgeschlagenen Verfahrens und der dazu gehörigen Vorrichtung ist darin zu sehen, dass es beim Verpressen zu keinen Materialanhäufungen und Graten kommt und die erforderliche Verpresskraft geringer ist.

Weitere Merkmale, Vorteile und Einzelheiten der Erfindung ergeben sich aus der nachfolgenden Beschreibung von in einer Zeichnung dargestellten Ausführungsbeispielen. Es zeigen:
- **Figur 1**: in einer Teil-Längsansicht eine erfindungsgemäß ausgebildete Pressbacke im Zusammenwirken mit einem Pressfittingelement und einem Leitungsrohr nach dem Ansetzen der Pressbacken
- **Figur 2**: wie Figur 1 nach dem Schließen der Pressbacken
- **Figur 3**: wie Figur 1 aber mit einer anderen Ringwulstform
- **Figur 4**: wie Figur 3 nach dem Schließen der Pressbacken
- **Figur 5**: wie Figur 1 aber mit einer anderen Ausgestaltung des Pressfittingelementes
- **Figur 6**: wie Figur 5 nach dem Schließen der Pressbacken

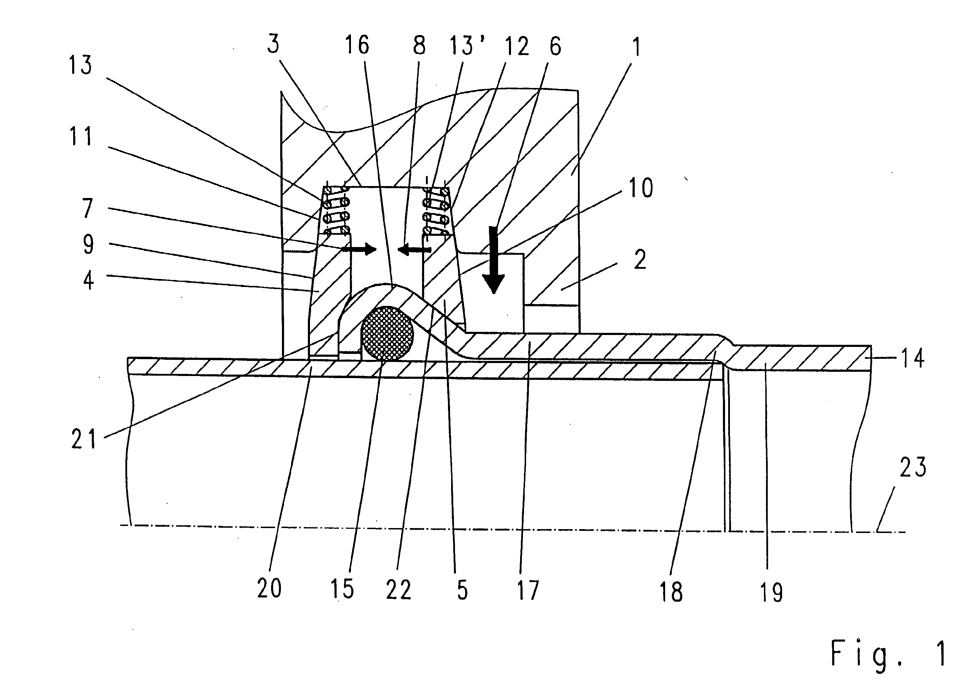

**Figur 1** zeigt in einer Teil-Längsansicht eine erfindungsgemäß ausgebildete Pressbacke 1, die in bekannter Weise zur Bildung der Festigkeitsebene einen Presssteg 2 aufweist. Abweichend von der bekannten Konstruktion ist die hier dargestellte Pressbacke 1 mit einer nutartigen Ausnehmung 3 versehen, in der radial beweglich zwei halbkreisförmige Elemente 4, 5 angeordnet sind.

Zur Umwandlung der radialen Bewegung der Pressbacke 1 - hier gekennzeichnet durch einen dicken Pfeil 6 - in eine axiale Bewegung der Elemente 4, 5 - hier gekennzeichnet durch zwei kleine Pfeile 7, 8 - sind die der Pressbacke 1 zugewandten Flächen 9, 10 der Elemente 4, 5 im Querschnitt keilförmig ausgebildet. Die damit zusammenwirkenden Flächen 11, 12 der nutartigen Ausnehmung 3 sind im Querschnitt ebenfalls keilförmig ausgestaltet. Damit die Elemente 4, 5 nicht lose in der Pressbacke 1 liegen, sind diese beispielhaft durch je eine Feder 13, 13' in der nutartigen Ausnehmung 3 fixiert.

Verpresst werden soll in diesem Ausführungsbeispiel ein Pressfittingelement 14 mit einer ein Dichtelement 15 aufnehmenden Ringwulst 16 und einem daran anschließenden zylindrisch ausgebildeten Abschnitt 17, der mit einem Absatz 18 übergeht in einen zweiten zylindrisch ausgebildeten Abschnitt 19. Dieses Pressfittingelement 14 kann Teil einer Muffe, eines Bogens, eines Reduzierstückes oder eines T-Stückes sein. Am Absatz 18 kommt das in das Pressfittingelement 14 eingeschlossene Leitungsrohr 20 zur Anlage.

Die mit der Ringwulst 16 in Kontakt tretenden Flächen 21, 22 der Elemente 4, 5 sind in diesem Ausführungsbeispiel konturiert und der äußeren Kontur der Ringwulst 16 angepasst. Im Falle einer asymmetrischen Ausbildung der Ringwulst 16, wie hier dargestellt, sind die beiden einander gegenüberliegenden Elemente 4, 5 verschieden.

Das Pressverfahren läuft in der Weise ab, dass das hier nicht dargestellte Presswerkzeug soweit geöffnet wird, dass die Pressbacke 1 mitsamt der Elemente 4, 5 über die Ringwulst 16 geschoben werden kann. Beim Ansetzen der Pressbacke 1 rutschen die Elemente 4, 5 radial in Richtung Längsachse 23, so dass in der Teilungsebene bezüglich der Elemente 4, 5 und der hier nicht dargestellten Elemente der zweiten Pressbacke kein Spalt entsteht.

Mit Beginn der Verpressung wird die Pressbacke 1 radial zugefahren, hier kenntlich gemacht durch den Pfeil 6. Durch die Keilwirkung der zusammenwirkenden Flächen 9, 10, 11, 12 werden die Elemente 4, 5 axial aufeinander zu gefahren, hier kenntlich gemacht durch die Pfeile 7, 8. Gleichzeitig wird die Ringwulst 16 axial zusammengedrückt und damit das darin eingekammerte Dichtelement 15 komprimiert. Da die Ringwulst 16 in radialer Richtung als ein starres Gebilde angesehen werden kann, hat das Dichtelement 15 nur noch die Möglichkeit in Richtung Leitungsrohr 20 auszuweichen. Die dadurch erzeugte Flächenpressung des kontaktierenden Umfanges des Dichtelementes 15 auf dem Leitungsrohr 20 bildet die Dichtigkeitsebene. Unabhängig davon wird durch das Einwirken des Pressstegs 2 auf den zylindrisch ausgebildeten Abschnitt 17 des Pressfittingelementes 14 sowie des darunter liegenden Abschnittes des Leitungsrohres 20 die Festigkeitsebene gebildet. Sobald die beiden Pressbacken geschlossen sind, ist die Verpressung beendet und die Pressbacken werden wieder auseinander gefahren bzw. auseinander geklappt.

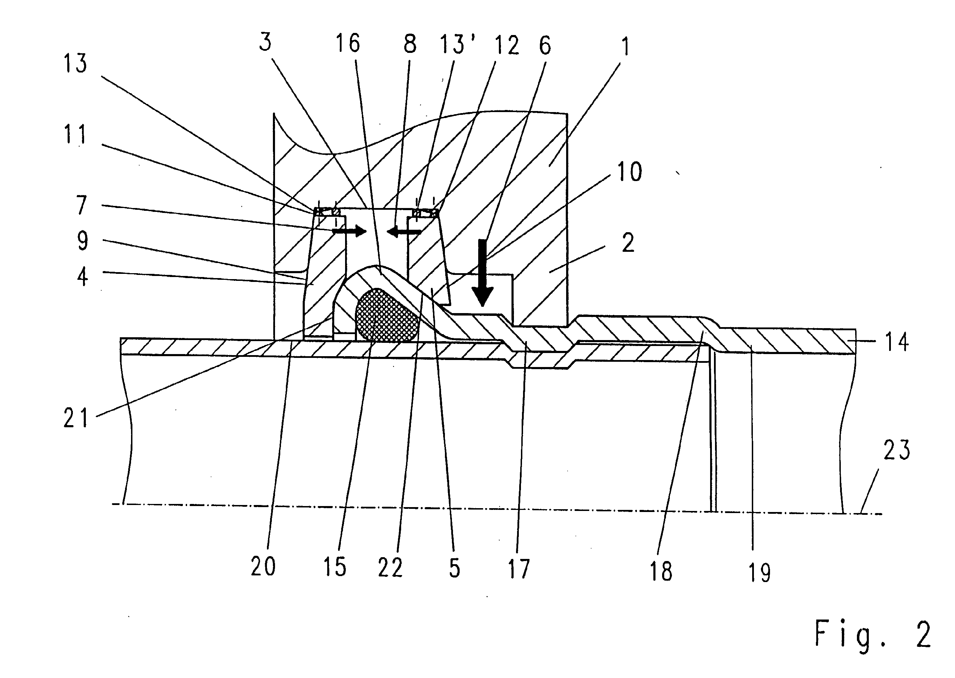

In **Figur 2**, die das Ende der Verpressung darstellt, ist die starke Verformung des Dichtelementes 15 insbesondere in radialer Richtung gut zu erkennen.

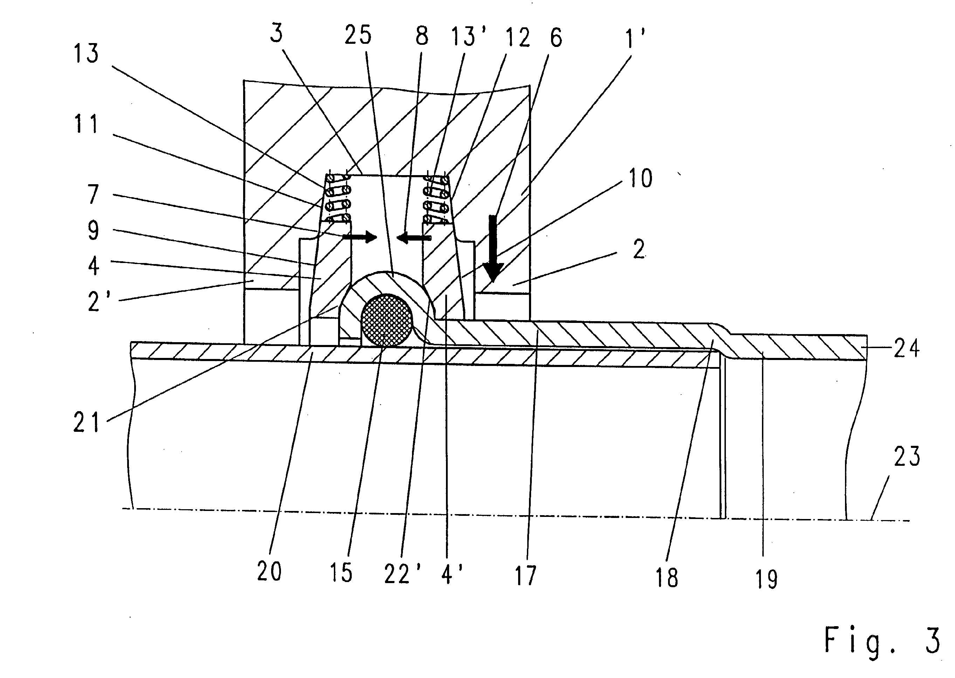

**Figur 3** zeigt im gleichen Teil-Längsschnitt ein zweites Beispiel der Bildung einer Rohrpressverbindung, wobei für gleiche Teile gleiche Bezugszeichen gewählt worden sind. In diesem Ausführungsbeispiel weist das Pressfittingelement 24 eine nahezu symmetrisch ausgebildete Ringwulst 25 auf. Dementsprechend sind auch die beiden Elemente 4, 4' sowie die mit der Ringwulst 25 in Kontakt tretenden Flächen 21, 22' der Elemente 4, 4' symmetrisch ausgebildet. Die übrige Anordnung ist deckungsgleich mit der in **Figur 2** dargestellten Ausführungsform, so dass sich eine Wiederholung erübrigt. Unterschiedlich ist noch, dass die Pressbacke 1' mit einem zweiten Presssteg 2' versehen ist, so dass die Pressbacke 1' auch anders herum aufgesetzt werden kann.

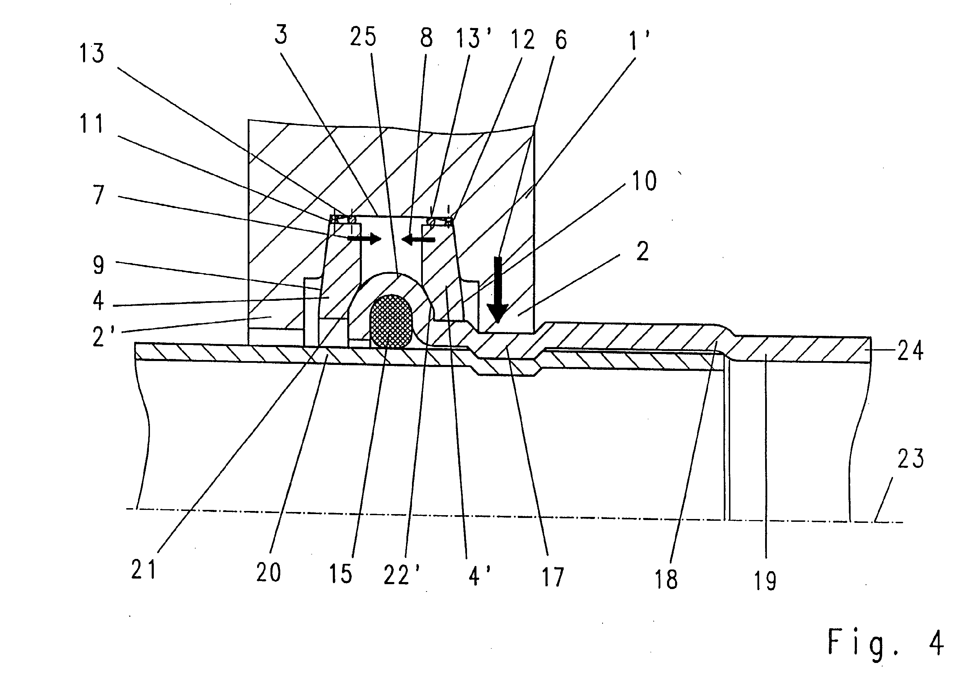

In **Figur 4** ist der Zustand nach der Verpressung dargestellt.

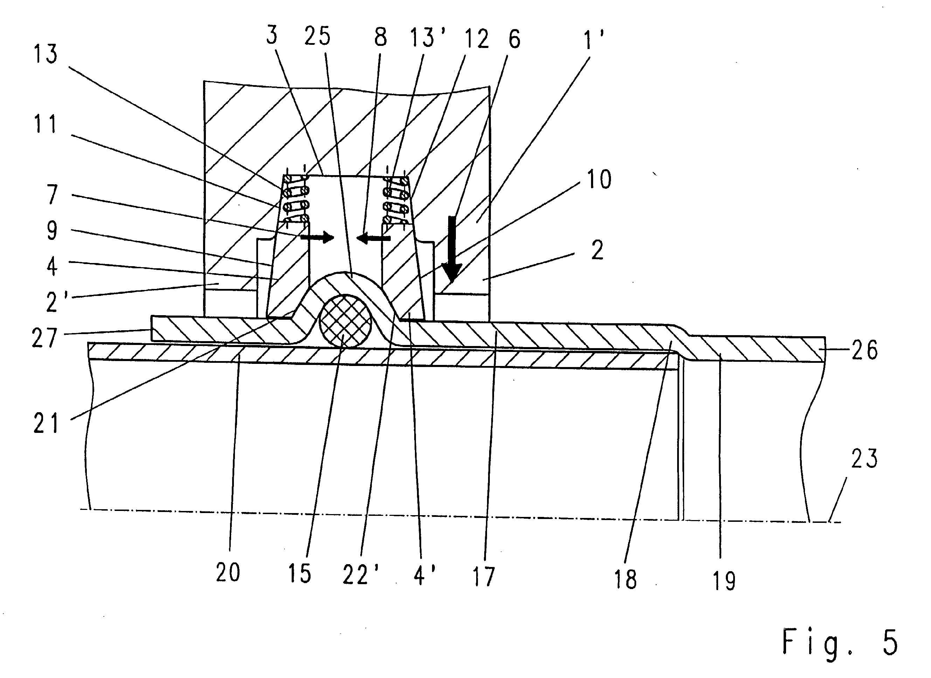

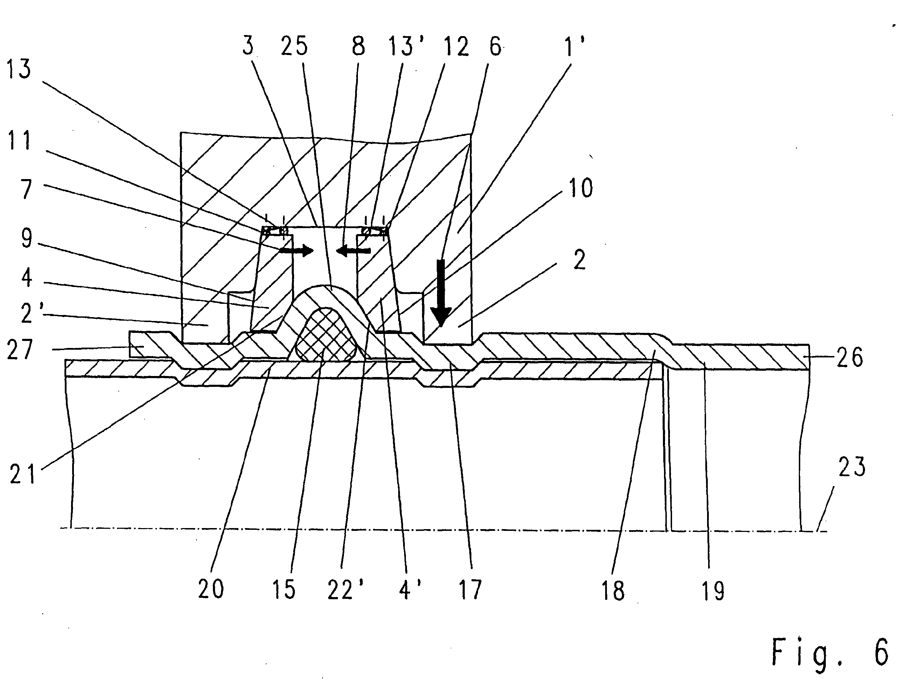

Ein weiteres Ausführungsbeispiel ist in **Figur 5** bzw. **Figur 6** dargestellt. In diesem Ausführungsbeispiel ist das Pressfittingelement 26 ebenfalls mit einer symmetrisch ausgebildeten Ringwulst 25 versehen, an die sich in Einschubrichtung des Leitungsrohres 20 ein weiterer zylindrisch ausgebildeter Abschnitt 27 anschließt. Die übrige Anordnung entspricht dem in **Figur 3** dargestellten Ausführungsbeispiel.

**Figur 6** zeigt den Zustand nach der Verpressung.

### Bezugszeichenliste

| **Nr.** | **Bezeichnung** |
|---|---|
| 1, 1' | Pressbacke |
| 2, 2' | Presssteg |
| 3 | Ausnehmung |
| 4, 4', 5 | halbkreisförmiges Element |
| 6 | Pfeil |
| 7, 8 | voll ausgemalter Pfeil |
| 9, 10 | der Pressbacke zugewandte Fläche der Elemente |
| 11, 12 | Flächen der Ausnehmung |
| 13, 13' | Feder |
| 14 | Pressfittingelement |
| 15 | Dichtelement |
| 16 | Ringwulst (asymmetrisch) |
| 17 | erster zylindrisch ausgebildeter Abschnitt |
| 18 | Absatz |
| 19 | zweiter zylindrisch ausgebildeter Abschnitt |
| 20 | Leitungsrohr |
| 21, 22, 22' | der Ringwulst zugewandte Fläche der Elemente |
| 23 | Längsachse |
| 24 | Pressfittingelement |
| 25 | Ringwulst (symmetrisch) |
| 26 | Pressfittingelement |
| 27 | dritter zylindrisch ausgebildeter Abschnitt |

## Patentansprüche

1. Verfahren zur Herstellung einer Rohrpressverbindung bestehend aus einem Pressfittingelement, das mindestens einen im Querschnitt wulstartig ausgebildeten, ein Dichtelement aufnehmenden Abschnitt und einen daran anschließenden der Einschubseite zugewandten und/oder der Einschubseite abgewandten, zylindrisch ausgebildeten Abschnitt aufweist, wobei der der Einschubseite abgewandte zylindrisch ausgebildete Abschnitt einen sich nach innen erstreckenden Absatz aufweist und in einen daran anschließenden zylindrisch ausgebildeten Abschnitt übergeht und einem Leitungsrohr, dessen glatt ausgebildeter Endbereich nach Einschub in den Pressfitting am Absatz des ersten zylindrisch ausgebildeten Abschnittes zur Anlage kommt, um mittels eines den Pressfitting umfassenden Presswerkzeuges eine unlösbare dichte Rohrpressverbindung zu bilden, wobei während des Verpressens das Presswerkzeug sowohl auf die Ringwulst, einschließlich des darin eingelegten Dichtelementes, als auch auf den der Einschubseite zugewandten und/oder abgewandten zylindrisch ausgebildeten Abschnitt des Pressfittings einwirkt
**dadurch gekennzeichnet,**
**dass** beim Schließen des mindestens zwei Pressbacken aufweisenden Presswerkzeuges die Ringwulst, einschließlich des darin eingelegten Dichtelementes, ausschließlich axial zusammengepresst werden, wobei die Pressbacken radial aufeinander zu gefahren werden.

2. Verfahren nach Anspruch 1
**dadurch gekennzeichnet,**
**dass** die radiale Bewegung der Pressbacken in eine axiale Bewegung eines auf die Ringwulst einwirkenden Elementes umgewandelt wird.

3. Verfahren nach Anspruch 1 und 2
**dadurch gekennzeichnet,**
**dass** die axiale Krafteinleitung im Fußbereich der Ringwulst einsetzt und zunehmend weitere Bereiche in Richtung Scheitelbereich erfasst.

4. Verfahren nach Anspruch 1 und 2
**dadurch gekennzeichnet,**
**dass** die axiale Krafteinleitung von Anbeginn an einen möglichst großen Bereich der Ringwulst erfasst.

5. Vorrichtung zur Durchführung des Verfahrens nach Anspruch 1, bestehend aus einem Presswerkzeug mit mindestens zwei radial aufeinander zu fahrbaren Pressbacken,
**dadurch gekennzeichnet,**
**dass** in einer nutartigen Ausnehmung (3) der Pressbacke (1, 1') mindestens ein halbkreisförmiges, eine Umwandlung der radialen Bewegung (6) der Pressbacke (1, 1') in ein axiales Zusammendrücken (7, 8) der Ringwulst (16, 25) bewirkendes Element (4, 4', 5), angeordnet ist.

6. Vorrichtung nach Anspruch 5
**dadurch gekennzeichnet,**
**dass** in der Pressbacke (1,1') zwei rechts und links neben der Ringwulst (16, 25) zur Anlage kommenden Elemente (4, 4', 5) angeordnet sind.

7. Vorrichtung nach Anspruch 5 und 6
**dadurch gekennzeichnet,**
**dass** das (die) Element(e) radial nachgebend in der nutartigen Ausnehmung (3) befestigt ist (sind).

8. Vorrichtung nach einem der Ansprüche 5 - 7
**dadurch gekennzeichnet,**
**dass** im Querschnitt gesehen die nutartige Ausnehmung (3) trapezartig ausgebildet ist und die schrägliegenden Flächen (9, 10) der Elemente (4, 4', 5) mit den komplementär schrägliegenden Flächen (11, 12) der nutartigen Ausnehmung (3) zusammenwirken.

9. Vorrichtung nach einem der Ansprüche 5 - 8
**dadurch gekennzeichnet,**
**dass** die die Ringwulst (16, 25) kontaktierende Fläche des Elementes gerade ist und senkrecht zur Längsachse (23) liegt.

10. Vorrichtung nach einem der Ansprüche 5 - 8
**dadurch gekennzeichnet,**
**dass** die die Ringwulst (16, 25) kontaktierende Fläche (21, 22, 22') des Elementes (4, 4', 5) eine der Kontur der Ringwulst (16, 25) angenäherte Kontur aufweist.

11. Vorrichtung nach Anspruch 9 und 10
**dadurch gekennzeichnet,**
**dass** bei einer symmetrischen Ausbildung der Ringwulst (25) die beiden Elemente (4, 4') gleich sind.
